# EUROPEAN PATENT APPLICATION

(11) **EP 2 430 954 A1**
(43) Date of publication of application: **21.03.2012**
(21) Application number: 11180255.9
(22) Date of filing: 06.09.2011
(51) Int. Cl.: A47J 31/40

(54) **Dispenser producing beverages from powder**

(30) Priority: 21.09.2010 EP 10178021
(71) Applicant: Nestec S.A., 1800 Vevey (CH)
(72) Inventor: Brunner, Yann, 1485 Nuvilly (CH); Wuergler, Hans, 9444 Diepoldsau (CH)
(74) Representative: Ducreux, Marie

(57) **Abstract**

The invention concerns a dispensing machine for producing beverages from a beverage ingredient powder comprising :
- diluent supply means (11, 12, 13),
- powder storing means (3),
- dosing means (4) for metering a dose of powder from the powder storing means,
- guiding means (5) for delivering the dose of powder from the dosing means to a container (2), wherein it further comprises valve means (6) able to close or open the bottom extremity of the guiding means (5).

## Description

The present invention relates to a dispenser for producing beverage from soluble beverage powders.

A beverage dispenser according to the invention is a device that prepares a beverage from one or more beverage ingredients by having the ingredients interact with a liquid. In some types of beverage dispensers, beverage sources that include concentrates and/or powders are mixed with a liquid, such as water for example, in order to prepare a beverage. Thereby, in particular in the field of hot beverages such as coffee, tea or hot chocolate, powders are used for the preparation of the beverage.

The known beverage dispensers therefore comprise a dosing device for dosing a predefined amount of soluble powder stored in a storage chamber into a mixing chamber or into a dedicated vessel. Therein, liquid can be introduced in order to interact with the soluble powder and hence, form a food composition.

The present invention particularly relates to dispensers in which the soluble powder is mixed with the liquid in the drinking cup and not in a mixing chamber. In such dispensers, the powder is usually metered by the dosing device and guided through a funnel or tube to the drinking cup. Liquid is simultaneously fed to the drinking cup so that dissolution occurs. Several issues exist with such a configuration. First due to the fact that the guiding tube emerges above the drinking cup then vapour and humidity from the beverage prepared in the drinking cup raises and enters the guiding tube. If another beverage is rapidly prepared after another one then the new dose of powder delivered by the tube reacts partially with the humidity in the tube and creates non hygienic deposits at the bottom extremity of the tube. This problem is generally solved by blowing air at the tube to deviate vapours. Secondly, the travel made by the powder from the dosing device through the guiding funnel until the bottom of the drinking cup can represent an important falling height. Consequently, when powder falls out of the funnel then fine particles of powder fly in the air and dirty the dispenser.

The aim of the present invention is to solve this problem and to propose a dispenser for producing beverage from soluble beverage powders in which the presence of fines out of the drinking cup is reduced.

According to a first aspect, the invention concerns a dispensing machine for producing beverages from a beverage ingredient powder comprising :
- a diluent supply means,
- at least one powder storing means,
- at least one dosing means for metering a dose of powder from the powder storing means,
- guiding means for delivering the dose of powder from the dosing means to a container, wherein it further comprises valve means able to close or open the bottom extremity of the guiding means.

Preferably in the dispenser of the present invention, the diluent supply means delivers the diluent in the container, which is usually a drinking cup. Consequently the beverage is prepared directly in the container and not in a mixing device of the dispenser.

The powder storing means can be a tank in which bulk powder is introduced. It can also be a housing for receiving a container containing a soluble powder. The container can a rigid vessel like a can, a canister, or a flexible pouch. The powder can be any soluble beverage ingredient like soluble coffee, tea, chocolate, milk, soup, cappuccino, ...

The dosing means can be any means able to meter a dose of powder from the storing means and deliver it to the guiding means. The dosing means can be any of a rotary pierced disc, a dosing auger, a shut off valve, an endless screw, a barrel, a sliding chamber or other known powder dosing devices. It can be part of the powder storing means or it can be an independent device in which an outlet of the powder storing means emerges. Preferably the dosing means is a member which is rotatably mounted and which comprises at least one recessed portion for receiving powder supplied by the powder storing means in a first rotational position and discharging powder to the guiding means in a second rotational position.

The guiding means for delivering the dose of powder to a container preferably comprises a tube of which bottom extremity emerges above the container. A part of the guiding means can be a hopper of which larger opening encompasses the outlet of the dosing means and of which smallest opening is linked to a tube evacuating the powder into the container. According to specific embodiment, the dispenser can comprise several powder storing means storing different powders and the guiding means can be divided in different channels separately guiding the different powders to the container. The hopper and the tube of the guiding means can be separated in as numerous channels as the number of powders. This embodiment avoids the cross-contamination of the guiding means with different beverage ingredients of different tastes (like coffee, coffee mixes comprising milk or soup).

The valve means can be a paddle operable to open or close the extremity of the guiding means above the container. The paddle can be operated according to a rotative or a linear movement.

Preferably the valve means closes the extremity of the guiding means when the dispenser is at rest. This embodiment enables the protection of the guiding means and their cleanliness. For example it prevents pests (like ants, cockroaches, ...) to introduce themselves in the guiding means. It also prevents humidity from entering in the guiding means in humid climate conditions.

Preferably the valve means closes the extremity of the guiding means when the dosing means is being actuated. Due to this configuration the metered dose of powder falls on the paddle closing the guiding means bottom extremity, then the valve means retains the dose of powder in the guiding means and the powder fines settle in the guiding means and not around the dispenser. According to the invention the dosing means is not actuated when the valve means is opening the guiding means bottom extremity.

The diluent supply means can be actuated when or after the valve means opens the extremity of the guiding means. Preferably the diluent supply means is being actuated after the valve means has opened and closed again the extremity of the guiding means so that vapours from the diluent cannot enter in the guiding means.

In a second aspect the invention concerns a method for producing a beverage by means of a dispenser such as described above wherein it comprises the steps of :
- metering a dose of powder and delivering said dose to the guiding means while the valve means closes the bottom extremity of the guiding means so that the valve means retains the dose of powder,
- opening the extremity of the guiding means to deliver the dose of powder to a container while keeping the dosing means inactivated and simultaneously or subsequently supplying diluent to the container.

Preferably the method comprises the step of closing the extremity of the guiding means after its opening for delivering the dose of powder to the container and before supplying diluent to the container.

### Brief description of the drawings

The characteristics and advantages of the invention will be better understood in relation to
- Figures 1 illustrates a dispenser according to the present invention.
- Figures 2a-2c illustrate a variant of the valve means of Figure 1 wherein the paddle is operable according to a rotating movement.

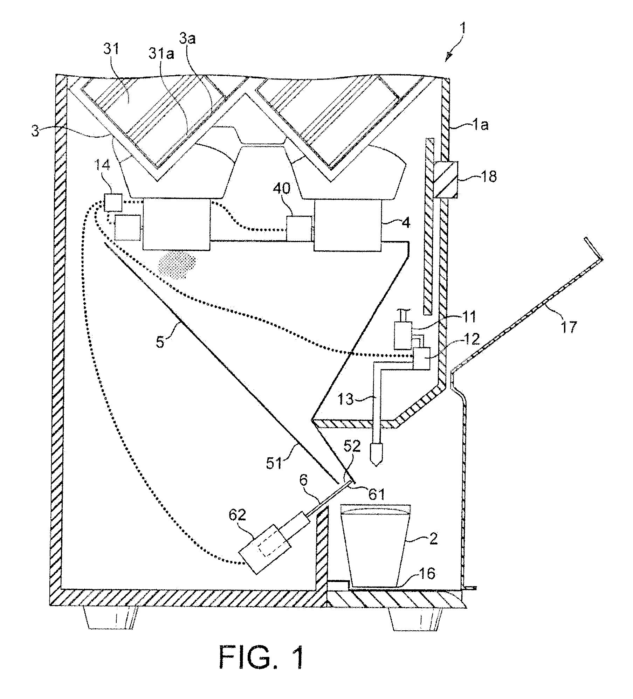

Figure 1 shows a sectional side view of a dispenser 1 according to the present invention. The device 1 comprises a housing 1a containing diluent supply means comprising at least a liquid reservoir (not shown), a heater 11, a pump 12 and a nozzle 13. The liquid reservoir is provided in order to supply liquid such as water to the heater 11 and the pump 12, and hence to the nozzle 13. The dispenser further comprises a stand 16 for a receptacle such as a cup 2. The dispenser 1 can comprise a cover member 17 for selectively enclosing the drinking cup 2 therein. Hence, a customer may open the cover member 17, place a cup 2 on the stand 16 and close the cover member again. Accordingly, a safe preparation of the beverage is enabled.

In the illustrated embodiment, the device 1 further comprises powder storing means 3 which houses two tin cans 31 of soluble powder. Yet the dispenser of the invention can comprise powder storing means 3 which is housing one or more than two tin cans 31 of soluble powder. In order to enable a provision of powder from the tin cans 31, the tin cans 31 comprise an aperture 31 a facing downwardly. The storing means 3 comprise at least one aperture 3a for each tin can aperture 31 a through which powder may be supplied to dosing means 4 connected to the storing means 3. To each of the dosing means 4, a motor 40 is connected in order to enable a rotation of the dosing means 4 and hence, a discharging of powder from the storing means 3.

As two tin cans 31 of soluble powder are provided in the device, at least two different powders can be supplied in order to prepare different beverages. Of course, the number of tin cans 31 and dosing means 4 within the dispenser may vary.

Powder which is discharged by the dosing means 4 is received by a hopper 5 which guides the powder from the dosing member 4 to the hopper bottom extremity 52 within the drinking cup 2. Preferably the hopper 5 comprises a tube 51 of bottom extremity 52 emerges above the drinking cup 2.

The dispenser preferably comprises a single button 18 for starting the beverage preparation process. In addition, the dispenser may comprise additional buttons for selectively supplying either cold or hot water to the drinking cup 2 and for selecting the beverage powder. Accordingly, a user can choose whether to prepare a cold or hot beverage. The device further comprises a main switch (not shown) and a plurality of control indicators (not shown) which may inform the user about the operating status of the dispenser.

During operation, the dosing means 4, the guiding means 5 and the powder storing means 3 enables a provision of a predefined dose of soluble powder to the drinking cup 2. After the powder has been supplied to the drinking cup 2, a predefined amount of liquid such as water is provided to the drinking cup 2 in order to interact with the dose of powder contained therein. Accordingly, a convenient and fast preparation of a beverage product is enabled by the dispenser.

According to the invention, the dispenser comprises valve means 6 for closing and opening the bottom extremity 52 of the tube 51 comprised in the hopper 5. In the dispenser of Figure 1 the valve means comprises a paddle 61. This paddle can be actuated by a motor operating a solenoid 62 to be :
- either pushed in front of the opening of the bottom extremity 52 of the powder guiding means 5 where it retains the powder dosed by the dosing means 4 inside the hopper 5.
- or retracted from the opening of the bottom extremity 52 of the powder guiding means 5 where it lets the powder that it was retaining fall inside the cup 2.

The dispenser further comprises control means 14 for controlling the dosing means and the valve means and for coordinating their activation. According to the invention, the dosing means is activated only after the valve means closed the bottom extremity of the guiding means 5. Then the powder dosed by the dosing means falls in the guiding means 5 through its tube 51 and is retained by the paddle 61 closing the bottom extremity 52 of the powder guiding means 5. The paddle is not immediately actuated so that the whole dose of powder and in particularly the fines can settle above the paddle 61.Then the valve means opens the bottom extremity 52 of the powder guiding means 5 and let the dose of powder falls in the cup 2. Due to the little distance between the bottom extremity 52 of the powder guiding means 5 and the bottom of the cup 2, the fines of the powder do not fly out of the cup 2 and do not dirty the stand 16.

Preferably the valve means retains the dosed powder as closed as possible from the bottom of the cup 2 to avoid the flying effect of the fines.

Preferably the valve means retains the dosed powder some seconds in the guiding means before it opens the bottom extremity 52 of the powder guiding means 5 so that the powder dust can settle on the valve means before being dispensed to the cup 2.

Usually the control means 14 also controls the pump 12 so that the diluent is supplied to the cup 2 while or, preferably, after the valve means 6 is opening the bottom extremity 52 of the guiding means 5. Preferably the paddle 61 closes again the extremity 52 of the guiding means before the diluent is supplied in the cup.

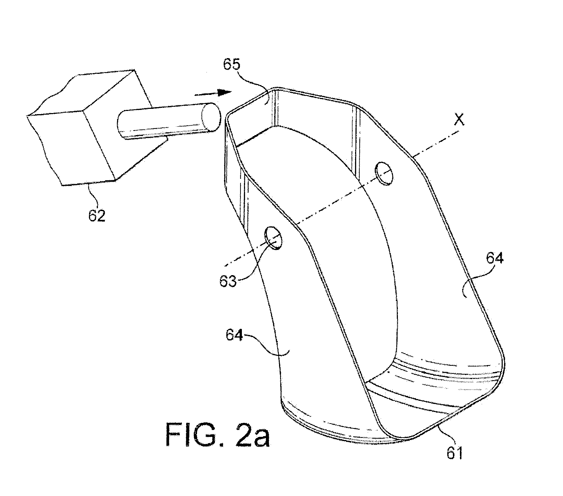

Figures 2a-2c illustrate another type of valve means that can be used in a dispenser of the present invention. These valve means closes and opens the bottom extremity 52 of the guiding means 5 according to a rotating movement of the paddle 61. According to the embodiment illustrated in Figure 2a the paddle 61 is fixed to the both arms 64 of a handle 65. These arms 64 are curved and pivotally mounted at the powder guiding means of the dispenser. The handle is actuated by a motorised actuator 62. The motor can drive a solenoid able to push the actuator so that the handle 65 and the arms are rotated about the pivot 63, it causes the paddle 61 to rotate away from its closing position. The handle 65 may be formed integrally with the arms 64 and the paddle 61.

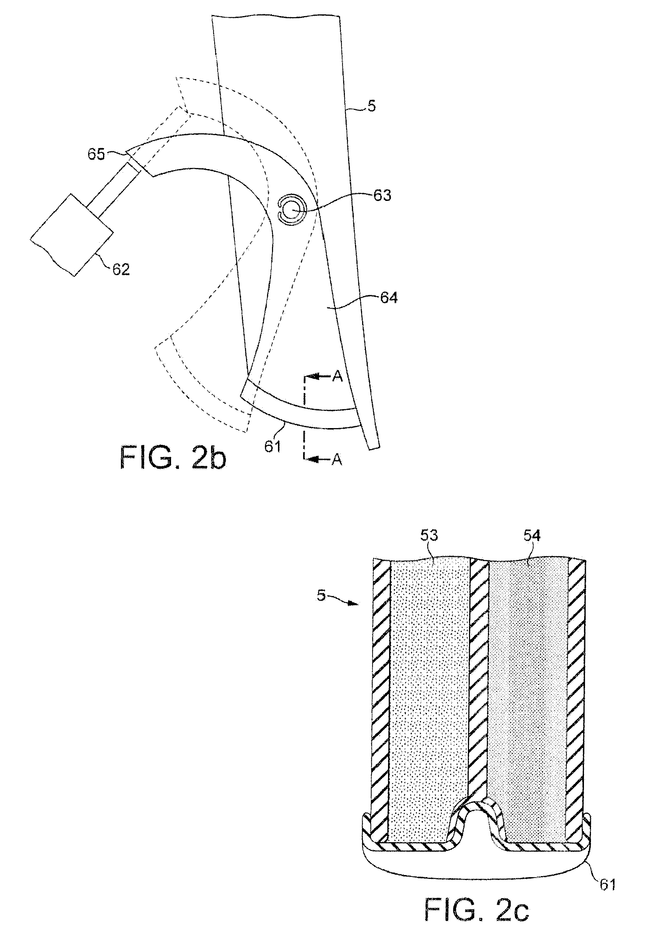

Figure 2b illustrates the paddle 61 in two different positions relative to the bottom extremity the guiding means 5. In straight line, the paddle 61 is in the position in which it closes the bottom extremity of the guiding means 5 : the actuator 62 does not exert any force on the handle 65. In dotted line, the actuator 62 pushes the handle 65 and makes the curved arms 64 rotates around the pivot 63 which displaces the paddle 61 away from the bottom extremity of the guiding means. A spring fixed at the pivot 63 may be included to bias the handle 65 to move toward its non actuated position and consequently to move the paddle 61 so that it closes the guiding means 5.

Figure 2c is a section view of Figure 2b according to axis AA. It makes apparent that the guiding means 5 is divided in two funnels 53, 54. This variant avoids the mixture of different powders issues from different storing means in the guiding means and the contamination of one beverage by the powder of a different taste.

The dispenser of the present invention presents the advantage of avoiding the dirtiness of the dispenser due to the fines.

The dispenser of the present invention presents also the advantage of avoiding the necessity to blow air at the guiding means bottom extremity since the valve means can automatically close this extremity when diluent is introduced in the cup.

## Claims

1. A dispensing machine for producing beverages from a beverage ingredient powder comprising :
- diluent supply means (11, 12, 13),
- powder storing means (3),
- dosing means (4) for metering a dose of powder from the powder storing means,
- guiding means (5) for delivering the dose of powder from the dosing means to a container (2), wherein it further comprises valve means (6) able to close or open the bottom extremity of the guiding means (5).

2. Dispensing machine according to Claim 1 wherein the diluent supply means (11, 12, 13) delivers diluent in the container (2).

3. Dispensing machine according to Claim 1 or 2 wherein the powder storing means (3) is a housing for receiving a vessel (31) containing a soluble powder.

4. Dispensing machine according to any of the precedent claims wherein the dosing means (4) is a member which is rotatably mounted and which comprises at least one recessed portion for receiving powder supplied by the powder storing means (3) in a first rotational position and discharging powder to the guiding means (5) in a second rotational position.

5. Dispensing machine according to any of the precedent claims wherein the guiding means (5) for delivering the dose of powder to a container comprises a tube (51) of which bottom extremity (52) emerges above the container (2).

6. Dispensing machine according to any of the precedent claims wherein the valve means (6) is a paddle operable to open or close the extremity of the guiding means (5) above the container (2).

7. Dispensing machine according to the precedent claim wherein the valve means (6) closes the extremity (52) of the guiding means at rest.

8. Dispensing machine according to claim 6 or 7 wherein the paddle is operable according to a rotating or a linear movement.

9. Dispensing machine according to any of the precedent claims wherein the valve means (6) closes the extremity (52) of the guiding means when the dosing means (4) is being actuated.

10. Dispensing machine according to the precedent claim wherein the diluent supply means (11, 12, 13) is being actuated when or after the valve means (6) opens the extremity (52) of the guiding means.

11. Method for producing a beverage by means of a dispenser according to any of claims 1 to 10 wherein it comprises the steps of :
- metering a dose of powder and delivering said dose to the guiding means (5) while the valve means (6) closes the bottom extremity (52) of the guiding means so that the valve means retains the dose of powder,
- opening the extremity (52) of the guiding means to deliver the dose of powder to a container (2) while keeping the dosing means inactivated and simultaneously or subsequently supplying diluent to the container.

12. Method according to Claim 11 wherein it comprises the step of closing the bottom extremity of the guiding means (52) after its opening for delivering the dose of powder to the container before the diluent is supplied to the container.
